# EUROPEAN PATENT SPECIFICATION

(11) **EP 0 442 349 B1**
(45) Date of publication and mention of the grant of the patent: **19.06.1996**
(21) Application number: 91101505.5
(22) Date of filing: 05.02.1991
(51) Int. Cl.: G07F 5/18, G07F 7/02

(54) **Minibar system**
Minibarsystem
Système de minibars

(30) Priority: 07.02.1990 IL 93308
(43) Date of publication of application: 21.08.1991
(73) Proprietor: TADIRAN ELECTRICAL APPLIANCES LTD., Tel Aviv (IL)
(72) Inventor: Asher, Amram, Sitriya No. 54 (IL); Lahav, Nathan, Zichron Yaacov (IL)
(74) Representative: Kraus, Walter, Dr.

(56) References cited:
- EP-A- 0 340 420
- WO-A-88/00741
- DE-A- 2 751 066
- GB-A- 1 536 533
- GB-A- 2 180 527
- US-A- 3 651 466

## Description

The invention relates to improvements in refrigerators, and mainly of minibars of the type provided in hotel rooms, where the guest removes certain items, generally a beverage, at his will, and is charged for these with his hotel bill.

In most rooms of modern hotels there are provided refrigerators wherein there are stored small bottles of alcoholic beverages, soft drinks and other items, and the hotel guest is provided with a key which enables him to remove any item he desires, and the guest is charged for such items with his hotel bill.

There are also known certain arrangements which indicate at the main desk whether and which type of items have been removed.

A computerized system for the operation of minibar units located in a plurality of hotel rooms, comprising a central computer-control unit connected with each of the minibars, means for enabling a guest to open the minibar whenever desired by inserting his access key into a suitable opening in the minibar, and means for denying further access by such a guest by a command issued by the control unit upon check-out of the guest or for any other compelling reason, is known from WO-A-8 800 741. This known system apart from the computer comprises a plurality of minibars with each such minibar including a plurality of article-dispensing devices, remotely-controlled locking means for preventing operation of the article-dispensing devices from dispensing articles, and means for producing signals in response to the operation of article-dispensing devices to dispense articles. In this system the computer is responsive to said signals for making a record of the article-dispensing devices which are operated to dispense articles and of the number of times each of said article-dispensing devices is operated. Furthermore, this system includes means to program the computer to control the locking means selectively to prevent said article-dispensing devices from dispensing articles.

As to the access of a guest to a minibar in the system of WO-A-8 800 741, the minibar may be key-enabled, that is, kept out of the system by a lock-switch until a guest - informed at check-in of the availability of in-room vending, opting for such availability, and given a key for the lock-switch - uses the key to switch the unit in his/her room into the system. The key for the lock-switch may be provided with the room key or separately. In this system, quite apart from in-room controls, the computer automatically transmits control signals to the logic and control circuitry for all minibars throughout the hotel to prevent operation of any article dispensing devices which contain alcoholic beverages during predetermined time periods when such beverages cannot lawfully be sold as well as to control unauthorized use of the article dispensing devices at all other times. Furthermore, the system of WO-A-8 800 741 can serve other control functions such as e.g. restocking and refrigeration.

Finally, document EP-A-0 340 420 discloses a minibar or the like having a locking means which only can be unlocked by a code or a key. The code used for unlocking is associated with a person or an account and thus enables the direct assignment of the removal of goods from the minibar to such person or account.

There exists the need for another solution of the problem of removal of items from the minibar after the guest pays his bill or after an inspection and before he checks out.

The invention provides improvements in minibar type refrigerators, used in hotel rooms. According to the invention as defined in the appended claims 1 and 2, the hotel guest presents his credit card when he checks in, the data are copied and fed to the lock of the minibar in his room, and the guest is provided with a magnetic key for his specific minibar or he is enabled to use his credit card for the opening of the minibar.

The central control at the main desk is informed each time the minibar is opened, and the main desk is also able to deny access to the minibar whenever this is justified; after checkout time, when children are in the room, after payment of the final bill etc.

The main feature of the invention is the use of the credit card of the guest in order to provide access to the minibar, either by itself or by a transfer of its code to a specific key provided by the hotel and by coding the minibar according to the data of the credit card of the guest.

Basically the minibar is opened by the use of the individual electronic card of the specific guest of a given room, or by a master key adapted to open many or all of the minibars in the hotel, enabling replenishment of stocks and checking on items used by the guest.

The minibar can also be provided with one or more sensors, providing information to the central computer as to whether the door of the minibar is open or closed, and whether the cooling mechanism is operating satisfactorily.

When the guest checks out, the code of the individual minibar of his room is changed, thus denying access to the minibar except for servicing personnel, until a new guest, provided with a newly coded electronic card which authorizes access to this minibar.

Thus, the system comprises a plurality of minibars, located in hotel rooms, each of which contains a computer controlled locking/unlocking device and a magnetic card reader. Insertion or passing the magnetic card results in the opening of the door of the minibar, and when the door is closed, it locks automatically. Each of the minibar units feeds the central computer with all the required data on number of openings of the minibar, on the status of the minibar and grants or denies access to the guest, depending on his status in the hotel; thus after check-out the access code is automatically cancelled and a new one is required for each subsequent guest of the given room.

There can be provided many variations of the system of the invention, which is described by way of example only with reference to the enclosed drawing, in which

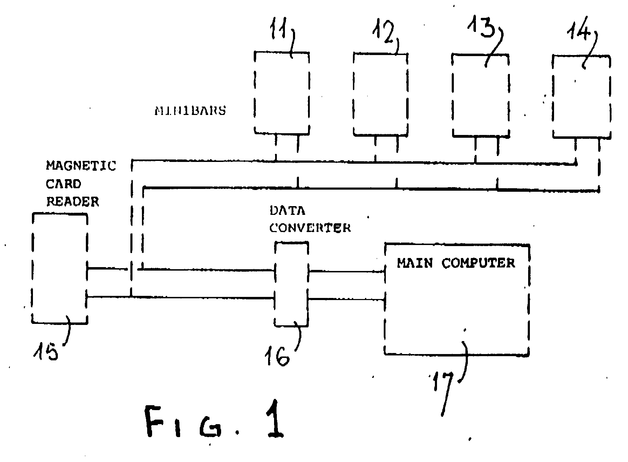

Fig. 1 is a block diagram of a system of the invention.

As shown in this Figure the system essentially comprises in combination a plurality of minibars, generally one per hotel room, designated here as 11,12,13 and 14. Each of these is connected with the control system, which comprises a card reader 15, a data converter 16 and a main computer 17.

Each of the minibars is equipped with a locking mechanism which comprises a motor which activates the lock catch, a switch which serves as a door open/closed sensor, and a reader of a magnetic card. The control circuitry of each minibar comprises a minicomputer unit, capable of communication with the main computer.

The main computer comprises a monitor. It has two main operating modes:
A.Normal mode - scanning the individual minibars and receiving door open/closed reports and sending out authorizations to open minibars after check-in, denying access after check-out.
B.Installation mode - the computer serves as a technician's tool for system installation.

The card reader is an auxiliary unit to the main computer, allowing it to accept a magnetic card which grants permission to unlock a certain minibar. The unit is similar to the one used in the minibar, but performs additional tasks. There is provided a communication network which consists of a pair of wires which interconnects all system units and is also connected to the main computer's card system units and is also connected to the main computer's card reader. Data can be transferred in RS485 form. The same pair of wires is connected to a converter which can transform the data into RS232 form and feed them to the main computer's serial input.

In its normal state, the minibar is locked. It can be unlocked
- By the authorised user
- By service personnel using a master card.

As soon as the door is opened, a timer is activated, and if the door is not closed within a given time, a brief alarm sounds.

Upon door closure (before or after the alarm) the minibar is automatically relocked.

The hotel guest of the given room may unlock the minibar if his check-in process has been run in the main computer. The first card read by the minibar after check-in is retained in memory as the "user's card". Only this card will permit subsequent unlocking of the minibar until the check-out process has been run in the main computer.

The minibar's control circuitry reports to the main computer all door opening or closing actions as well as master card reassignments and the master card will unconditionally open any minibar, For door opening, one has to slide the card along the card reader's slot or provide for another electronic scan.

The following is an outline of the main computer operation.

When switched on, the LOGO will appear on the screen. Pressing ENTER will cause the main menu to appear.

### Main menu selections:

- Check-in
- Check-out
- Operational status

### Check-in procedure:

(1) Select CHECK-IN on the main menu
(2) Select the desired room number
(3) Pass a user's card in the card reader
(4) Press any key to complete data transfer.

### Check-out procedure:

(1) Select CHECK-OUT on the main menu
(2) Select the desired room number

### Operational Status:

(1) If OPERATIONAL STATUS is selected on the main menu, there are two options:
   - General status and communication with remote units
   - Single room status
(2) General status provides information on the number of door openings in all the rooms since the last replenishment.
(3) Single room status details all events since the last replenishment.

## Claims

1. A computerized system for the operation of minibar units located in a plurality of hotel rooms, comprising in combination a central computer-control unit (17) connected with each of the minibars (11 to 14), means for coding the lock of a given minibar (11 to 14) upon the check-in of a hotel guest according to the data of the credit card of the guest and for providing an identical code at the control unit (17), so as to enable the guest to open the minibar (11 to 14) whenever desired by inserting his credit card into a suitable opening in the minibar (11 to 14), and means for denying further access by such guest by a command issued by the control unit (17) upon check-out of the guest or for any other compelling reason.

2. A computerized system for the operation of minibar units located in a plurality of hotel rooms, comprising in combination a central computer-control unit (17) connected with each of the minibars (11 to 14), means for coding the lock of a given minibar (11 to 14) upon the check-in of a hotel guest according to the data of the credit card of the guest and for providing an identical code at the control unit (17), means for transferring said code to a specific access card or key, so as to enable the guest to open said given minibar (11 to 14) whenever desired by inserting said specific access card or key into a suitable opening in the minibar (11 to 14), and means for denying further access by such guest by a command issued by the control unit (17) upon check-out of the guest or for any other compelling reason.

3. A system according to claim 1 or 2, characterized in that there is provided a master card or key suited for the opening of a number of minibars (11 to 14) for use of servicing personnel.

4. A system according to claim 1, 2 or 3, characterized in that the minibar (11 to 14) is provided with a sensor indicating to the control unit (17) important parameters as to the operation of the minibar (11 to 14).

5. A system according to claim 4, characterized in that the indication is of whether the minibar (11 to 14) is cooling or whether the door is open or closed.

6. A system according to anyone of claims 1 to 5, characterized in that the control unit (17) is informed automatically upon each opening of the door of the minibar (11 to 14).

## Patentansprüche

1. Rechnergestütztes bzw. -gesteuertes System für den Betrieb von Minibar-Einheiten, die sich in einer Mehrzahl von Hotelräumen befinden, umfassend in Kombination eine zentrale Computersteuereinheit (17), die mit jeder der Minibars (11 bis 14) verbunden ist, ein Mittel zum Kodieren des Schlosses einer gegebenen Minibar (11 bis 14) beim Absteigen eines Hotelgasts gemäß den Daten der Kreditkarte des Gasts und zum Vorsehen eines identischen Codes in der Steuereinheit (17), so daß der Gast befähigt wird, die Minibar (11 bis 14), wann immer es gewünscht wird, durch Einführen seiner Kreditkarte in eine geeignete Öffnung in der Minibar (11 bis 14) zu öffnen, und ein Mittel zum Verweigern eines weiteren Zugangs durch einen solchen Gast mittels eines durch die Steuereinheit (17) beim Abmelden des Gasts oder aus irgendeinem anderen zwingenden Grund ausgegebenen Befehls.

2. Rechnergestütztes bzw. -gesteuertes System für den Betrieb von Minibar-Einheiten, die sich in einer Mehrzahl von Hotelräumen befinden, umfassend in Kombination eine zentrale Computersteuereinheit (17), die mit jeder der Minibars (11 bis 14) verbunden ist, ein Mittel zum Kodieren des Schlosses einer gegebenen Minibar (11 bis 14) bei Absteigen eines Hotelgasts gemäß den Daten der Kreditkarte des Gasts und zum Vorsehen eines identischen Codes in der Steuereinheit (17), ein Mittel zum Übertragen des Codes auf eine spezielle Zugangskarte oder einen speziellen Zugangsschlüssel, so daß der Gast befähigt wird, die gegebene Minibar (11 bis 14), wann immer es gewünscht wird, durch Einführen seiner speziellen Zugangskarte oder seines speziellen Zugangsschlüssels in eine geeignete Öffnung in der Minibar (11 bis 14) zu öffnen, und ein Mittel zum Verweigern eines weiteren Zugangs durch einen solchen Gast mittels eines durch die Steuereinheit (17) beim Abmelden des Gasts oder aus irgendeinem anderen zwingenden Grund ausgegebenen Befehls.

3. System gemäß Anspruch 1 oder 2, dadurch **gekennzeichnet,** daß eine Hauptkarte oder ein Hauptschlüssel, die bzw. der für das Öffnen einer Anzahl von Minibars (11 bis 14) zur Verwendung des Bedienungspersonals geeignet ist, vorgesehen ist.

4. System gemäß Anspruch 1, 2 oder 3, dadurch **gekennzeichnet,** daß die Minibar (11 bis 14) mit einem Sensor versehen ist, der der Steuereinheit (17) wichtige Parameter, welche den Betrieb der Minibar (11 bis 14) betreffen, angibt.

5. System gemäß Anspruch 4, dadurch **gekennzeichnet,** daß die Angabe die ist, ob die Minibar (11 bis 14) kühlt oder ob die Tür geöffnet oder geschlossen ist.

6. System gemäß irgendeinem der Ansprüche 1 bis 5, dadurch **gekennzeichnet,** daß die Steuereinheit (17) automatisch über jedes Öffnen der Tür der Minibar (11 bis 14) informiert wird.

## Revendications

1. Système informatisé pour le fonctionnement d'unités minibar disposées dans une pluralité de chambres d'hôtel, comprenant en combinaison une unité centrale de commande informatique (17) connectée à chacun des minibars (11 à 14), des moyens pour coder le verrou d'un minibar donné (11 à 14) dès l'enregistrement d'un client de l'hôtel en fonction des données de la carte de crédit du client et pour fournir un code identique à l'unité de commande (17), de manière à permettre au client d'ouvrir le minibar (11 à 14) quand il le souhaite par introduction de sa carte de crédit dans une ouverture appropriée du minibar (11 à 14) et des moyens pour empêcher un autre accès par le client au moyen d'une commande délivrée par l'unité de commande (17) après règlement du client ou pour toute autre raison contraignante.

2. Système informatisé pour le fonctionnement d'unités minibar disposées dans une pluralité de chambres d'hôtel, comprenant en combinaison une unité centrale de commande informatique (17) connectée à chacun des minibars (11 à 14), des moyens pour coder le verrou d'un minibar donné (11 à 14) dès l'enregistrement d'un client de l'hôtel en fonction des données de la carte de crédit du client et pour fournir un code identique à l'unité de commande (17), des moyens pour transférer ledit code à une carte ou clé d'accès spécifique, de manière à permettre au client d'ouvrir ledit minibar donné (11 à 14) quand il le désire en insérant ladite carte ou clé d'accès spécifique dans une ouverture appropriée du minibar (11 à 14), et des moyens pour empêcher un autre accès par ledit client au moyen d'une commande délivrée par l'unité de commande (17) après le règlement du client ou pour toute autre raison contraignante.

3. Système selon les revendications 1 ou 2, caractérisé en ce qu'il et prévu une carte maîtresse ou une clé convenant à l'ouverture de plusieurs minibars (11 et 14) et susceptible d'être utilisée par le personnel de service.

4. Système selon les revendications 1, 2 ou 3, caractérisé en ce que le minibar (11 à 14) est pourvu d'un détecteur indiquant à l'unité de commande (17) des paramètres importants tels que le fonctionnement du minibar (11 à 14).

5. Système selon la revendication 4, caractérisé en ce que l'indication est soit que le minibar (11 à 14) est en réfrigération, soit que la porte est ouverte ou fermée.

6. Système selon l'une quelconque des revendications 1 à 5, caractérisé en ce que l'unité de commande (17) est informée automatiquement dès chaque ouverture de la porte du minibar (11 à 14).
